Europäisches Patentamt

European Patent Office

Office européen des brevets

(19)

(11) Numéro de publication : **0 398 403 B1**

## FASCICULE DE BREVET EUROPEEN

(12)

(45) Date de publication du fascicule du brevet :
07.04.93 Bulletin 93/14

(51) Int. Cl.⁵ : **F16B 19/10**

(21) Numéro de dépôt : **90200970.3**

(22) Date de dépôt : **19.04.90**

(54) **Organe de rivetage aveugle, procédé d'assemblage et assemblages obtenus.**

(30) Priorité : **19.05.89 FR 8906693**

(43) Date de publication de la demande :
**22.11.90 Bulletin 90/47**

(45) Mention de la délivrance du brevet :
**07.04.93 Bulletin 93/14**

(84) Etats contractants désignés :
**AT BE CH DE DK ES FR GB GR IT LI LU NL SE**

(56) Documents cités :
**DE-A- 1 400 837**
**DE-A- 2 821 356**
**FR-A- 738 317**
**FR-A- 2 314 387**
**US-A- 2 030 166**
**US-A- 4 635 310**

(73) Titulaire : **ATELIERS DE LA HAUTE-GARONNE**
**- ETABLISSEMENTS AURIOL & Cie S.a.R.L.**
**Flourens**
**F-31130 Balma (FR)**
Titulaire : **Auriol, Jean-Marc**
**Les Blanches Flourens**
**F-31130 Balma (FR)**
Titulaire : **Bornes, Philippe**
**La Madeleine Flourens**
**F-31130 Balma (FR)**

(72) Inventeur : **Auriol, Jean-Marc**
**Les Blanches, Flourens**
**F-31130 Balma (FR)**
Inventeur : **Bornes, Philippe**
**La Madeleine, Flourens**
**F-31130 Balma (FR)**

(74) Mandataire : **Barre, Philippe**
**Cabinet Barre-Gatti-Laforgue 95 rue des**
**Amidonniers**
**F-31069 Toulouse Cédex (FR)**

## Description

L'invention concerne un organe de rivetage aveugle perfectionné ; elle vise un organe de rivetage du type comprenant, d'une part, une douille tubulaire appelée à dépasser des matériaux à assembler par un tronçon de queue, d'autre part, un mandrin possédant une tête destinée à venir en appui contre le tronçon de queue de la douille et une tige logée dans ladite douille, le rivetage étant réalisé par une traction axiale sur ladite tige de mandrin. L'invention s'étend au procédé d'assemblage utilisant ledit organe de rivetage ainsi qu'aux assemblages réalisés.

Dans un type courant d'organe de rivetage aveugle, la tête du mandrin est profilée pour pouvoir pénétrer dans la douille tubulaire lors de la traction afin d'évaser celle-ci et de créer ainsi une portée d'appui sur les matériaux. Les brevets FR-A-2.306.361 ou GB-A-1.330.501 présentent par exemple des rivets de ce type. Toutefois, la portée obtenue au moyen de ces rivets est de surface très limitée et, provenant d'un gonflement, sa direction est très inclinée dans le sens axial : une telle portée assure un maintien des matériaux peu résistant et peu sûr, cependant qu'elle conduit à une déformation préjudiciable des matériaux en bordure du trou ; en particulier, cette déformation est inacceptable dans le cas de matériaux fragiles, notamment dans le cas de matériaux composites (matériaux synthétiques laminés renforcés par des fibres) qui sont blessés aux abords du trou avec délaminage et décollement des fibres et du liant.

Par ailleurs, dans certains organes de fixation, le tronçon de queue de la douille est divisée en plusieurs secteurs au moyen de fentes longitudinales et, lors de la traction sur le mandrin, ces secteurs s'ouvrent et se replient sur eux-mêmes pour former plusieurs languettes en saillie qui viennent en appui contre les matériaux à assembler. Par exemple, le brevet US-A-4.289.061 montre un tel organe dans lequel trois fentes longitudinales délimitent trois secteurs repliables appelés à s'ouvrir pour former trois languettes de maintien des matériaux. Toutefois, la portée d'appui ainsi créée est discontinue et sa résistance est de ce fait considérablement amoindrie, non seulement en raison de la réduction de sa surface périphérique, mais encore et surtout, en raison de la discontinuité de la matière sur le pourtour de la douille. De plus, les matériaux à assembler sont maintenus à la périphérie du trou par une succession de zones d'appui et de zones libres, ce qui est très défavorable, notamment dans le cas de matériaux fragiles où les contraintes créées à la jonction de ces zones peuvent engendrer des altérations locales. En outre, la fabrication de ces organes de fixation est plus complexe que dans le cas précédent en raison de la découpe de secteurs qui constitue une opération délicate exigeant une bonne précision.

Par ailleurs, le brevet US 2 030 166 décrit un organe de rivetage dans lequel une douille est conformée pour se déformer radialement afin de former un repli à l'arrière des matériaux à assembler. Toutefois ce repli réalisé par une déformation strictement radiale ne peut se rapprocher des tôles pour prendre appui avec celles-ci : il est donc inapte à :réer lors du rivetage une portée continue venant en appui contre les matériaux à la périphérie du trou.

La présente invention se propose de fournir un procédé d'assemblage au moyen d'un organe de rivetage aveugle, permettant de créer lors du rivetage une portée continue, de large surface et de direction appropriée, venant en appui contre les matériaux à assembler en vue de réaliser un maintien résistant et sûr desdits matériaux sans risque de blessure de ceux-ci sur le pourtour du trou.

A cet effet, le procédé d'assemblage visé par l'invention utilise un organe de rivetage aveugle du type comprenant une douille tubulaire d'un seul tenant et un mandrin possédant une tête de diamètre supérieur à l'alésage de la douille et une tige logée dans ledit alésage avec un prolongement dépassant à l'opposé de sa tête ; ce procédé consiste :

- à percer un trou dans les matériaux,
- à utiliser un organe de rivetage aveugle dont la douille possède un tronçon d'insertion de diamètre externe correspondant sensiblement au diamètre du trou et un tronçon de queue appelé à dépasser d'un. côté des matériaux et présentant successivement une première zone d'articulation, une portion inclinée, une seconde zone d'articulation et une portion extrême, ladite portion extrême et la tête du mandrin étant pourvues de moyens de maintien adaptés pour interdire un glissement radial de l'extrémité libre de douille par rapport à la tête de mandrin,
- à mettre en place l'organe de rivetage dans le trou des matériaux de sorte que le tronçon de queue de la douille dépasse d'un côté et que le prolongement du mandrin dépasse de l'autre côté, la tête de mandrin étant appliquée contre l'extrémité libre de la portion extrême de douille de sorte que leurs moyens de maintien coopèrent,
- et à exercer une traction sur le prolongement du mandrin de façon que la tête de celui-ci développe un effort longitudinal sur l'extrémité libre de la douille.

Le procédé d'assemblage selon l'invention est caractérisé en ce que :
- l'on choisit un organe de rivetage possédant les caractéristiques suivantes :
  . la première zone d'articulation comprend une gorge externe délimitée par deux lèvres évasées obliques par rapport à un plan radial, cette première zone d'articulation étant située à proximité de la jonction entre le tronçon d'insertion logé dans le trou des matériaux et le tronçon de queue dépassant de celui-ci, de façon qu'elle vienne se positionner à proximité de la surface des matériaux lorsque l'organe de rivetage est mis en place dans le trou,

. la portion inclinée présente une forme générale tronconique tubulaire et s'écarte de l'axe de la douille à partir de la première zone d'articulation,

. la seconde zone d'articulation est une zone angulaire de changement de direction vers l'axe, un espace vide annulaire séparant la face interne de la douille de la surface externe du mandrin,

. la portion extrême présente une forme tubulaire de direction différente de celle de la portion inclinée pour former avec cette dernière un angle inférieur à 180 °,

- l'on exerce une traction appropriée sur le prolongement du mandrin et une contrepression périphérique sur la douille de façon à engendrer un pliage dissymétrique de la première zone d'articulation et de la seconde zone d'articulation et à former à proximité des matériaux un repli de la douille orienté vers lesdits matériaux,

- l'on poursuit la traction précitée pour rapprocher le repli des matériaux et l'amener à venir en appui contre lesdits :matériaux en vue de former une portée d'appui à la périphérie du trou.

Ainsi dans l'invention, la douille demeure tubulaire sur toute sa longueur, c'est-à-dire qu'elle est continue sur tout son périmètre jusqu'à l'extrémité libre de la portion extrême. Lors du rivetage, la tête de mandrin est appliquée contre l'extrémité libre de douille, les moyens de maintien évitant qu'elle puisse glisser et s'ouvrir comme dans le cas des rivets à gonflement connus ; dans ces conditions, une traction appropriée sur le prolongement du mandrin, associée à une contrepression périphérique sur la douille, réalise un pliage des première et seconde zones d'articulation, amenant la portion inclinée de la douille (comprise entre ces deux zones d'articulation) à s'épanouir et à se replier longitudinalement vers les matériaux à assembler jusqu'à venir en contact contre ceux-ci à la périphérie du trou. Il est essentiel de souligner que le pliage est programmé par les structures de la douille et s'effectue de façon naturelle sans que la douille prenne appui contre le bord du trou en cours de pliage. Ainsi, les matériaux à assembler sont préservés. En fin de pliage, le contact avec les matériaux est continu, de direction appropriée pour produire un bon maintien desdits matériaux, et de surface qui peut être beaucoup plus importante que dans les rivets à gonflement en raison du processus de double pliage mis en oeuvre.

La douille et le mandrin de l'organe de rivetage conforme à l'invention peuvent être réalisés en tout matériau adapté à l'application envisagée : titane, acier inoxydable, alliage léger... Par exemple pour l'assemblage de matériaux fragiles tels que matériaux composites pour lesquels l'invention est particulièrement intéressante, l'on peut réaliser la douille en titane ou alliage de titane et le mandrin en acier inoxydable.

Selon un mode de réalisation préféré, la seconde zone d'articulation peut être une zone angulaire définissant un angle interne $\alpha$ de changement de direction entre portion inclinée et portion extrême, sensiblement compris entre 150° et 175°.

En outre, la portion extrême peut en particulier être une portion sensiblement cylindrique s'étendant parallélement à l'axe.

Par ailleurs, les moyens de maintien précités qui ont pour fonction de supprimer tout risque de pénétration de la tête 'de mandrin dans la douille lorsque la traction radiale est exercée sur ledit mandrin, peuvent être constitués par des formes conjuguées adaptés pour s'interpénétrer, prévues, d'une part, à l'extrémité libre de la douille et, d'autre part, sur la face en regard de la tête de mandrin.

De plus, la douille de l'organe de rivetage conforme à l'invention peut être pourvue, de façon classique, d'une tête préformée située à l'opposé du tronçon de queue ; le cas échéant, la tête de douille peut être réalisée lors du rivetage par écrasement de l'extrémité de douille opposée au tronçon de queue.

En outre, l'organe de rivetage conforme à l'invention peut être doté, de façon connue en soi, de moyens de sertissage et de moyens de rupture en fin de pose, ces moyens classiques réalisant en fin de pose un sertissage du mandrin dans la douille et engendrant une rupture du prolongement de la tige de mandrin.

L'invention ayant été exposée dans sa forme générale, la description qui suit en référence aux dessins annexés en présente à titre d'exemple non limitatif un mode de réalisation ; sur ces dessins qui font partie intégrante de la présente description :

- la figure 1 est une coupe axiale, à échelle dilatée, d'un organe de rivetage conforme à l'invention,

- les figures 2, 3, 4, 5, 6 et 7 sont des vues schématiques en coupe, illustrant la pose de cet organe de rivetage,

- la figure 8 est une coupe axiale de l'assemblage obtenu,

- la figure 9 est une coupe axiale montrant en variante un assemblage obtenu, après rupture de la douille au niveau de la première zone d'articulation.

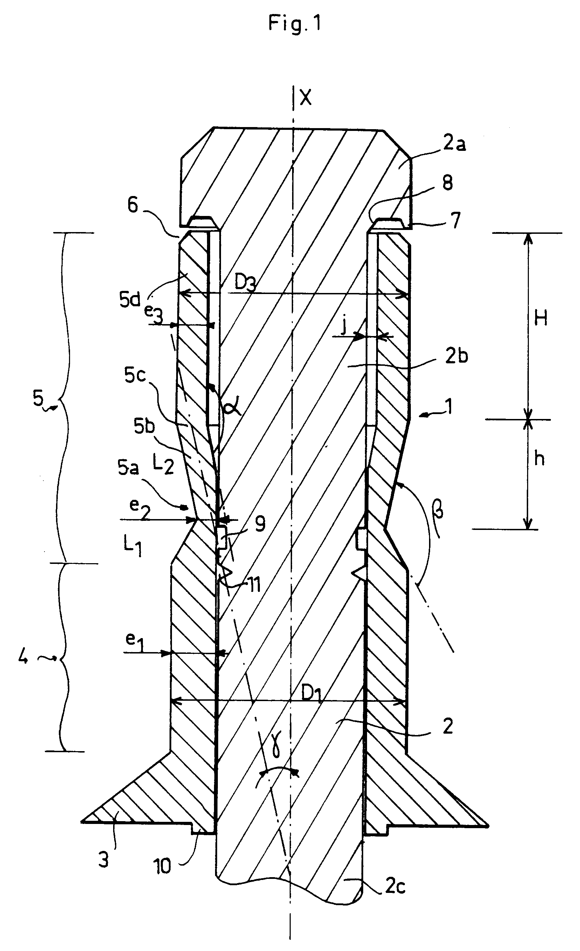

L'organe de rivetage représenté à titre d'exemple à la figure 1 comprend une douille tubulaire 1 et un mandrin 2 s'étendant le long d'un axe X. Par exemple, notamment lorsqu'il s'agit d'assembler des matériaux composites, la douille 1 peut être en alliage de titane et le mandrin 2 en acier inoxydable.

La douille 1 comprend une tête préformée 3, constituée en l'exemple par une tête fraisée dont la face tronconique peut présenter de façon classique un angle de conicité de 120° environ.

Cette douille comprend en outre une tige formant un tronçon d'insertion 4 appelé à se loger dans le trou des matériaux à assembler et un tronçon de queue 5 appelé à dépasser d'un côté desdits matériaux à l'opposé de la tête préformée. Le tronçon d'insertion 4 est délimité par deux surfaces cylindriques.

Le tronçon de queue 5 comporte une première zone d'articulation 5a d'épaisseur réduite, une portion inclinée 5b s'écartant de l'axe d'un angle γ, une seconde zone d'articulation 5c définissant un changement de direction d'angle α et une portion extrême 5d.

La première zone d'articulation 5a est conformée par une gorge externe délimitée par deux lèvres évasées de forme tronconique L₁, L₂ dont l'angle d'ouverture β est compris entre 120° et 160°, en l'exemple de l'ordre de 150°. La profondeur de ladite gorge est telle que le rapport $\frac{e_2}{e_1}$ des épaisseurs au niveau de la zone 5a et au niveau du tronçon d'insertion 4 soit approximativement compris entre 0,3 et 0,7 et en particulier de l'ordre de 0,45.

La lèvre L₁ de la gorge réalise la jonction avec le tronçon d'insertion 4, cependant que la lèvre L₂ forme la face externe de la portion inclinée 5b.

Cette portion inclinée 5b présente une forme générale tronconique tubulaire, formant avec l'axe X un angle γ sensiblement compris entre 5 et 30°, en l'exemple de l'ordre de 10°. Elle se raccorde à la portion extrême 5d par la seconde zone d'articulation 5c qui définit un angle interne α de changement de direction compris entre 150° et 175°, en l'exemple de l'ordre de 170°.

La portion extrême 5d est cylindrique, c'est-à-dire délimitée par deux surfaces cylindriques d'axe X. Le rapport $\frac{e_3}{e_2}$ des épaisseurs au niveau de cette portion extrême 5d et de la zone d'articulation 5a est compris entre 1,3 et 1,9 en l'exemple de l'ordre de 1,6.

De plus, le rapport $\frac{h}{H}$ des longueurs axiales de la portion inclinée 5b et de la portion extrême 5d est compris entre 0,4 et 1 en l'exemple de l'ordre de 0,7.

Le diamètre externe D₃ de la portion extrême 5d est voisin du diamètre D₁ du tronçon d'insertion 4 ; en l'exemple, ces deux diamètres sont égaux (D₁ = D₃).

A son extrémité libre, la portion extrême 5d comporte un chanfrein 6 ménagé sur son bord externe, afin de jouer le rôle de moyen de maintien de cette extrémité lors du rivetage.

Par ailleurs, le mandrin 2 est pourvu d'une tête 2a de diamètre externe égal à celui du tronçon d'insertion 4 et de la portion extrême 5d de la douille. Ce mandrin possède une tige cylindrique 2b adaptée pour se loger dans l'alésage de la douille au niveau de son tronçon d'insertion 4 ; ainsi, un espace annulaire vide -j- sépare la face interne cylindrique de la portion extrême 5d et la surface cylindrique de la tige 2b du mandrin.

Sur sa face en regard avec l'extrémité libre de la douille, la tête 2a de mandrin est dotée d'une collerette 7 de forme conjuguée à celle du chanfrein 6 afin de pouvoir venir en appui contre celui-ci et d'interdire tout glissement centrifuge de l'extrémité libre de douille en cours de rivetage.

En outre, ladite tête de mandrin est également pourvue d'un chanfrein 8 situé à la jonction tête/tige en regard de l'espace vide -j- séparant tige de mandrin et portion extrême de douille. Ce chanfrein 8 assure un maintien de l'extrémité libre de douille dans le sens centripète.

La tige de mandrin dépasse du côté de la tête préformée 3 de la douille par un prolongement 2c qui permet d'exercer la traction axiale de rivetage.

Il est à noter que le diamètre de la tige 2b du mandrin qui correspond à l'alésage du tronçon d'insertion 4 de la douille peut le cas échéant être légèrement supérieur à ce dernier de façon à assurer un gonflement de ce tronçon d'insertion lors du rivetage (le prolongement de tige 2c présente alors un diamètre inférieur à celui de la partie 2b de la tige).

Par ailleurs, l'organe de rivetage conforme à l'invention est doté de façon connue en soi de moyens de sertissage du mandrin dans la douille et de moyens de rupture du prolongement de mandrin en fin de pose. Ces moyens de sertissage peuvent par exemple être constitués par une rainure circulaire 9 ménagée sur la tige de mandrin et par une nervure circulaire 10 prévue sur la tête 3 de douille de façon à former un excès de matière apte à fluer vers la rainure 9 en fin de rivetage. Les moyens de rupture peuvent être constitués par une gorge 11 de profondeur adaptée pour produire à son niveau une rupture au-delà d'un effort de traction déterminé.

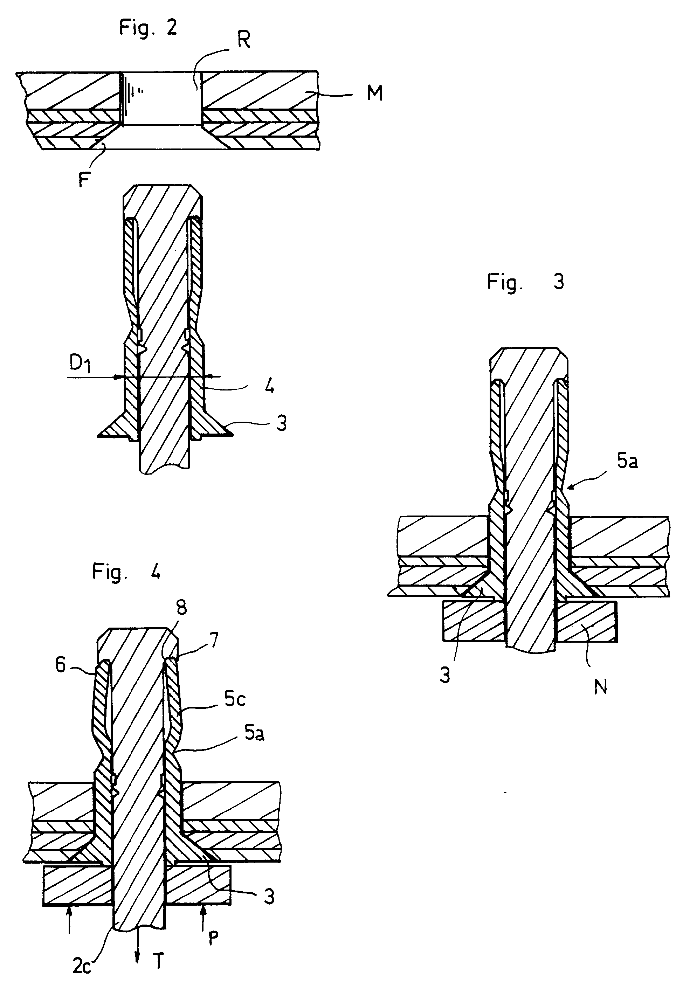

Les figures 2 à 7 illustrent la pose de l'organe de rivetage décrit ci-dessus dans des épaisseurs de matériaux composites M. Ces matériaux sont percés d'un trou R de diamètre correspondant sensiblement au diamètre externe D₁ du tronçon d'insertion 4, avec une fraisure F de forme conjuguée à celle de la tête préformée 3 (figure 2).

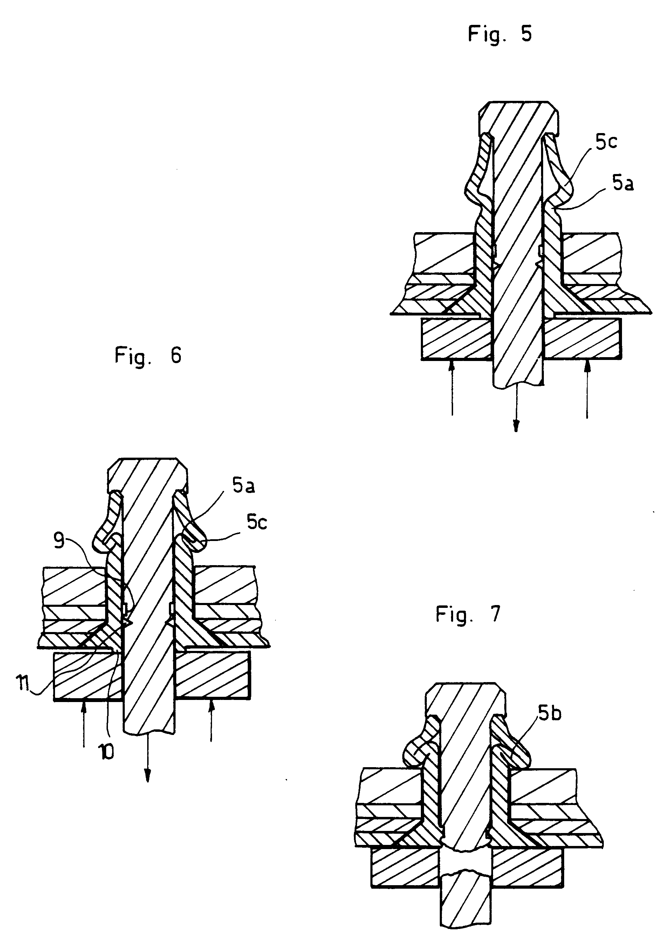

L'organe de rivetage est mis en place dans ce trou et un outil de rivetage traditionnel comprenant une enclume annulaire N est appliqué contre la tête préformée 3 (figure 3). L'organe de rivetage est choisi en fonction de l'épaisseur des matériaux à assembler de façon que la première zone d'articulation 5a soit à l'extérieur et au voisinage des matériaux. (Il est à noter que des épaisseurs différentes de matériaux peuvent être assemblées au moyen d'un même rivet, le double pliage de celui-ci se réalisant jusqu'à ce que la portée formée vienne en appui contre les matériaux).

Le prolongement 2c de la tige du mandrin est saisi par les mors de l'outil et une traction T est exercée sur la tige de mandrin, en même temps qu'une contrepression P est appliquée par l'enclume N sur la tête préformée 3 (figure 4). L'extrémité libre de la douille, maintenue par les moyens de maintien 6-8 contre la tête de mandrin, subit un effort longitudinal qui, compte-tenu de l'agencement structurel du tronçon de queue 5, se traduit par des moments au niveau des deux zones d'articulation 5c et 5a, engendrant un pliage de ces zones (figures 5, 6 et 7). Ce pliage (en sens inverse au niveau de ces deux zones) conduit à un repliement de la portion inclinée 5b qui vient s'appliquer contre les matériaux (figure 7). Il est essentiel de noter que la portée ainsi créée est continue sur tout le pourtour de la douille et présente une surface et une direction radiale assurant un maintien résistant et sûr des matériaux, sans blessure de ceux-ci aux abords du trou, puisque le pliage s'est effectué sans pression contre les bords dudit trou.

En fin de pose, l'écrasement de la nervure 10 de la tête de douille conditionne un fluage vers la rainure 9 de la tige de mandrin et un sertissage de celle-ci, cependant que ladite tige se rompt au niveau de la gorge de rupture 11. L'extrémité de douille est elle-même sertie dans la tête de mandrin, ce qui contribue à rendre indéformable le pli de douille qui forme la portée d'appui contre les matériaux.

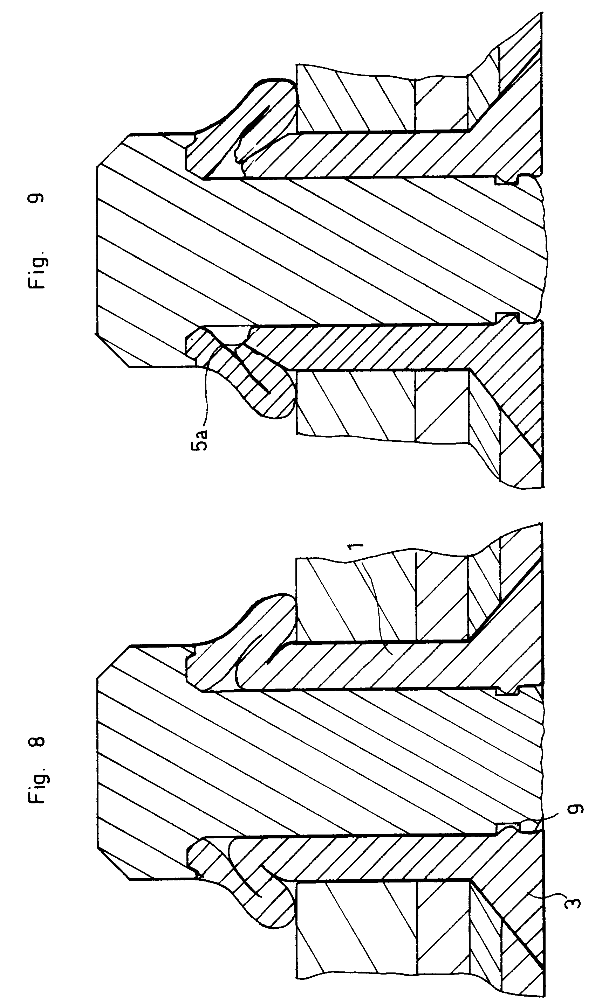

L'assemblage obtenu est schématisé à la figure 8. Sur toute sa longueur, la douille 1 est renforcée par le mandrin 2 qui la remplit (avec gonflement éventuel comme déjà indiqué), ce qui confère à l'assemblage une excellente résistance au cisaillement et à la fatigue.

Il est à noter que, comme l'illustre la figure 9, une rupture de la douille peut se produire au niveau de la première zone d'articulation 5a (selon la nature des matériaux utilisés, les dimensions relatives des diverses parties et les efforts de rivetage). Cette rupture ne présente aucune gêne et ne réduit pas la tenue de l'assemblage.

## Revendications

1. Procédé d'assemblage de matériaux au moyen d'un organe de rivetage aveugle du type comprenant une douille tubulaire d'un seul tenant (1) et un mandrin (2) possédant une tête (2a) de diamètre supérieur à l'alésage de la douille (1) et une tige (2b) logée dans ledit alésage avec un prolongement (2c) dépassant à l'opposé de sa tête, ledit procédé consistant :

   - à percer un trou dans les matériaux,

   - à utiliser un organe de rivetage aveugle dont la douille (1) possède un tronçon d'insertion de diamètre externe correspondant sensiblement au diamètre du trou et un tronçon de queue (5) appelé à dépasser d'un côté des matériaux et présentant successivement une première zone d'articulation (5a), une portion inclinée (5b), une seconde zone d'articulation (5c) et une portion extrême (5d), ladite portion extrême (5d) et la tête (2a) du mandrin étant pourvues de moyens de maintien (6-8) adaptés pour interdire un glissement radial de l'extrémité libre de douille par rapport à la tête de mandrin,

   - à mettre en place l'organe de rivetage dans le trou des matériaux de sorte que le tronçon de queue de la douille dépasse d'un côté et que le prolongement du mandrin dépasse de l'autre côté, la tête de mandrin étant appliquée contre l'extrémité libre de la portion extrême de douille de sorte que leurs moyens de maintien coopèrent,

   - et à exercer une traction sur le prolongement du mandrin de façon que la tête de celui-ci développe un effort longitudinal sur l'extrémité libre de la douille,

ledit procédé étant caractérisé en ce que :

   - l'on choisit un organe de rivetage possédant les caractéristiques suivantes :

     . la première zone d'articulation (5a) comprend une gorge externe délimitée par deux lèvres évasées obliques par rapport à un plan radial, cette première zone d'articulation étant située à proximité de la jonction entre le tronçon d'insertion (4) logé dans le trou des matériaux et le tronçon de queue (5) dépassant de celui-ci, de façon qu'elle vienne se positionner à proximité de la surface des matériaux lorsque l'organe de rivetage est mis en place dans le trou,

     . la portion inclinée (5b) présente une forme générale tronconique tubulaire et s'écarte de l'axe de la douille à partir de la première zone d'articulation,

     . la seconde zone d'articulation (5c) est une zone angulaire de changement de direction vers l'axe, un espace vide annulaire séparant la face interne de la douille de la surface externe du mandrin,

     . la portion extrême (5d) présente une forme tubulaire de direction différente de celle de la portion inclinée (5b) pour former avec cette dernière un angle ($\alpha$) inférieur à 180 °,

   - l'on exerce une traction appropriée sur le prolongement du mandrin et une contrepression périphérique sur la douille de façon à engendrer un pliage dissymétrique de la première zone d'articulation et de la seconde zone d'articulation et à former à proximité des matériaux un repli de la douille orienté vers lesdits matériaux,

- l'on poursuit la traction précitée pour rapprocher le repli des matériaux et l'amener à venir en appui contre lesdits matériaux en vue de former une portée d'appui à la périphérie du trou.

2. Organe de rivetage aveugle pour la mise en oeuvre du procédé conforme à la revendication 1, comprenant une douille tubulaire d'un seul tenant (1) et un mandrin (2) possédant une tête (2a) de diamètre supérieur à l'alésage de la douille (1) et une tige (2b) logée dans ledit alésage avec un prolongement (2c) dépassant à l'opposé de sa tête, ladite douille (1) possédant un tronçon d'insertion de diamètre externe correspondant sensiblement au diamètre du trou et un tronçon de queue (5) appelé à dépasser d'un côté des matériaux et présentant successivement une première zone d'articulation (5a), une portion inclinée (5b), une seconde zone d'articulation (5c) et une portion extrême (5d), ladite portion extrême (5d) et la tête (2a) du mandrin étant pourvues de moyens de maintien (6-8) adaptés pour interdire un glissement radial de l'extrémité libre de douille par rapport à la tête de mandrin, ledit organe de rivetage étant caractérisé en ce que :

. la première zone d'articulation (5a) comprend une gorge externe délimitée par deux lèvres évasées obliques par rapport à un plan radial, ladite zone étant située à proximité de la jonction entre le tronçon d'insertion (4) appelé à se loger dans le trou des matériaux et le tronçon de queue (5) appelé à dépasser de celui-ci, de façon qu'elle vienne se positionner à proximité de la surface des matériaux lorsque l'organe de rivetage est mis en place dans le trou,

. la portion inclinée (5b) présente une forme générale tronconique tubulaire et s'écarte de l'axe de la douille à partir de la première zone d'articulation,

. la seconde zone d'articulation (5c) est une zone angulaire de changement de direction vers l'axe, un espace vide annulaire séparant la face interne de la douille de la surface externe du mandrin,

. la portion extrême (5d) présente une forme tubulaire de direction différente de celle de la portion inclinée (5b) pour former avec cette dernière un angle ($\alpha$) inférieur à 180 °.

3. Organe de rivetage aveugle selon la revendication 2, caractérisé en ce que l'angle d'ouverture $\beta$ formé par les deux lèvres ($L_1$, $L_2$) de la gorge est sensiblement compris entre 120° et 160°.

4. Organe de rivetage aveugle selon l'une des revendications 2 ou 3, caractérisé en ce que l'épaisseur $e_2$ de la douille au niveau de la première zone d'articulation (5a) est telle que $0,3 \leq \dfrac{e_2}{e_1} \leq 0,7$ où $e_1$ est l'épaisseur de ladite douille au niveau du tronçon d'insertion (4).

5. Organe de rivetage aveugle selon l'une des revendications 2, 3 ou 4, caractérisé en ce que la portion inclinée (5b) de la douille forme avec l'axe (X) un angle d'inclinaison $\gamma$ sensiblement compris entre 5 et 30°.

6. Organe de rivetage aveugle selon l'une des revendications 2 à 5, caractérisé en ce que la seconde zone d'articulation (5c) est une zone angulaire de changement de direction définissant un angle interne $\alpha$ entre la portion inclinée (5b) et la portion extrême (5d) sensiblement compris entre 150° et 175°.

7. Organe de rivetage aveugle selon l'une des revendications 2 à 6, caractérisé en ce que la portion extrême (5d) de la douille est une portion sensiblement cylindrique s'étendant parallèlement à l'axe (X).

8. Organe de rivetage aveugle selon la revendication 7, caractérisé en ce que le mandrin (2) possède une tige (2b) de forme cylindrique, un espace annulaire vide (j) séparant la face interne cylindrique de la portion extrême (5d) de douille et la surface cylindrique de ladite tige de mandrin.

9. Organe de rivetage aveugle selon l'une des revendications 2 à 8, caractérisé en ce que l'épaisseur $e_3$ de la douille au niveau de la portion extrême (5d) est telle que $1,3 \leq \dfrac{e_3}{e_2} \leq 1,9$, le diamètre externe $D_3$ de ladite portion extrême étant au plus égal au diamètre externe $D_1$ du tronçon d'insertion.

10. Organe de rivetage aveugle selon l'une des revendications 2 à 9, caractérisé en ce que les moyens de maintien comprennent un chanfrein externe (6) ménagé sur l'extrémité libre de la portion extrême (5d) de douille et une collerette conjuguée (7d) prévue sur la face en regard de la tête de mandrin (2a) en vue d'interdire un glissement centrifuge de l'extrémité libre de douille.

**11.** Organe de rivetage selon les revendications 8 et 10 prises ensemble, caractérisé en ce que la tête de mandrin (2a) comprend un chanfrein (8) à la jonction tête/tige en vue de maintenir l'extrémité libre de douille dans le sens centripète.

**12.** Organe de rivetage selon l'une des revendications 2 à 11, caractérisé en ce que la portion inclinée (5b) et la portion extrême (5d) de douille possèdent des longueurs axiales respectivement h et H telles que $0,4 \leqq \frac{h}{H} \leqq 1$.

**13.** Organe de rivetage selon l'une des revendications 2 à 12, dans lequel la douille tubulaire (1) est pourvue d'une tête préformée (3) à l'opposé de son tronçon de queue (5).

**14.** Organe de rivetage selon l'une des revendications 2 à 13, comprenant des moyens (9, 10) de sertissage du mandrin dans la douille et des moyens (11) de rupture du prolongement de mandrin en fin de pose.

**15.** Assemblage de matériaux obtenu par mise en oeuvre du procédé conforme à la revendication 1, dans lequel les matériaux sont maintenus entre une tête de la douille, notamment préformée, et une portée d'appui continue, formée par un repli unique de la douille s'étendant de façon continue autour du trou des matériaux.

**Patentansprüche**

**1.** Verfahren zur Verbindung von Materialien mit Hilfe einer Blindnieteinheit der eine aus einem Stück bestehende rohrförmige Hülse (1) und einen Dorn (2) umfassenden Art, wobei der besagte Dorn einen Kopf (2a), dessen Durchmesser größer ist als der der Bohrung der Hülse (1), sowie einen in der besagten Bohrung sitzenden Schaft (2b) mit einer an dem dem Kopf gegenüber befindlichen Ende überstehenden Verlängerung (2c) besitzt, und zwar besteht das besagte Verfahren:
- im Bohren eines Loches in den Materialien,
- im Gebrauch einer Blindnieteinheit, deren Hülse (1) einen Einführabschnitt besitzt, dessen Außendurchmesser im wesentlichen dem Durchmesser des Loches entspricht, sowie einen Schaftabschnitt (5), der so beschaffen ist, daß er an einer Seite der Materialien übersteht und der Reihe nach eine erste Knickzone (5a), einen Schrägabschnitt (5b), eine zweite Knickzone (5c) und einen Endabschnitt (5d) aufweist, wobei der besagte Endabschnitt (5d) und Kopf (2a) des Dornes mit Haltemitteln (6-8) solcher Art, daß sie radiales Gleiten des freien Endes der Hülse im Verhältnis zu dem Kopf des Dornes verhindern, versehen sind,
- im Einsetzen der Nieteinheit in das Loch in den Materialien, so daß der Schaftabschnitt der Hülse an einer Seite übersteht und daß die Verlängerung des Dornes an der anderen Seite übersteht, während der Kopf des Dornes an das freie Ende des Endabschnitts der Hülse angepreßt wird, so daß deren Haltemittel zusammenwirken,
- sowie im Ausüben eines Zuges auf die Verlängerung des Dornes, so daß dessen Kopf an dem freien Ende der Hülse eine Längsspannung entwickelt,

wobei das besagte Verfahren dadurch gekennzeichnet ist,
- daß man eine Nieteinheit mit den folgenden Merkmalen wählt:
  . die erste Knickzone (5a) umfaßt eine äußere, im Verhältnis zu einer radialen Ebene durch zwei schräge, ausfallende Lippen abgegrenzte Auskehlung, wobei sich diese erste Knickzone in Nähe des Anschlusses zwischen Einführabschnitt (4) in dem Loch in den Materialien und dem darüber hinausgehenden Schaftabschnitt (5) befindet, so daß sie in Nähe der Oberfläche der Materialien zu liegen kommt, wenn die Nieteinheit in dem Loch eingesetzt ist.
  . der Schrägabschnitt (5b) hat eine rohrförmige, kegelstumpfartige Allgemeinform und setzt sich von der ersten Knickzone an von der Hülse ab,
  . die zweite Knickzone (5c) ist eine winkelige Zone der Richtungsänderung zur Achse, wobei ein ringförmiger Leerraum die Innenfläche der Hülse von der Außenfläche des Dornes trennt,
  . der Endabschnitt (5d) ist rohrförmig mit einer anderen Richtung als der des Schrägabschnitts (5b), so daß er mit diesem letzteren einen Winkel ($\alpha$) bildet, der geringer ist als 180°,
- daß man einen entsprechenden Zug auf die Verlängerung des Dornes sowie einen peripheren Gegendruck auf die Hülse ausübt, um eine unsymmetrische Faltung der ersten Knickzone und der zweiten Knickzone zu bewirken und in Nähe der Materialien eine auf die besagten Materialien zu gerichtete Hülsenfalte zu erzeugen,
- daß man mit dem besagten Zug fortsetzt, um die Materialfalte zusammenzuführen und zu bewirken, daß diese an den besagten Materialien anliegt, um eine Abstützung am Rande des Loches zu bilden.

2. Blindnieteinheit zum Durchführen des Verfahrens nach Anspruch 1, umfassend eine aus einem Stück bestehende rohrförmige Hülse (1) und einen Dorn (2), wobei der besagte Dorn einen Kopf (2a), dessen Durchmesser größer ist als der der Bohrung der Hülse (1), sowie einen in der besagten Bohrung sitzenden Schaft (2b) mit einer an dem seinem Kopf gegenüberliegenden Ende überstehenden Verlängerung (2c) besitzt, und zwar umfaßt die besagte Hülse (1) einen Einführabschnitt, dessen Aussendurchmesser im wesentlichen dem Durchmesser des Loches entspricht, sowie einen Schaftabschnitt (5), der so beschaffen ist, daß er an einer Seite der Materialien übersteht und der Reihe nach eine erste Knickzone (5a), einen Schrägabschnitt (5b), eine zweite Knickzone (5c) und einen Endabschnitt (5d) aufweist, wobei der besagte Endabschnitt (5d) und Kopf (2a) des Dornes mit Haltemitteln (6-8) solcher Art versehen sind, daß sie radiales Gleiten des freien Endes der Hülse im Verhältnis zu dem Kopf des Dornes verhindern, und zwar ist die besagte Nieteinheit dadurch gekennzeichnet,

. daß die erste Knickzone (5a) eine äußere, im Verhältnis zu einer radialen Ebene durch zwei schräge, ausfallende Lippen abgegrenzte Auskehlung umfaßt, wobei sich die besagte Zone in Nähe des Anschlusses zwischen dem zur Einfügung in das Loch in den Materialien bestimmten Einführabschnitt (4) und dem zum Darüberhinausgehen bestimmten Schaftabschnitt (5) befindet, so daß sie in Nähe der Oberfläche der Materialien zu liegen kommt, wenn die Nieteinheit in dem Loch eingesetzt ist,

. daß der Schrägabschnitt (5b) eine rohrförmige, kegelstumpfartige Allgemeinform hat und sich von der ersten Knickzone an von der Hülse absetzt,

. daß die zweite Knickzone (5c) eine winkelige Zone der Richtungsänderung zur Achse ist, wobei ein ringförmiger Leerraum die Innenfläche der Hülse von der Außenfläche des Dornes trennt,

. daß der Endabschnitt (5d) rohrförmig ist, mit einer anderen Richtung als der des Schrägabschnitts (5b), so daß er mit diesem letzteren einen Winkel ($\alpha$) bildet, der geringer ist als 180°.

3. Blindnieteinheit nach Anspruch 2, dadurch gekennzeichnet, daß der durch die beiden Lippen (L₁, L₂) der Auskehlung gebildete Öffnungswinkel ($\beta$) im wesentlichen zwischen 120° und 160° beträgt.

4. Blindnieteinheit nach einem der Ansprüche 2 oder 3, dadurch gekennzeichnet, daß die Dicke $e_2$ der Hülse in Höhe der ersten Knickzone (5a) $0,3 \leqq \frac{e_2}{e_1} \leqq 0,7$ entspricht, wobei $e_1$ die Dicke der besagten Hülse in Höhe des Einführabschnitts (4) ist.

5. Blindnieteinheit nach einem der Ansprüche 2, 3 oder 4, dadurch gekennzeichnet, daß der Schrägabschnitt (5b) der Hülse mit der Achse (X) einen Neigungswinkel ($\gamma$) bildet, der im wesentlichen zwischen 5° und 30° beträgt.

6. Blindnieteinheit nach einem der Ansprüche 2 bis 5, dadurch gekennzeichnet, daß die zweite Knickzone (5c) eine winkelige Zone der Richtungsänderung zur Achse ist, die zwischen dem Schrägabschnitt (5b) und dem Endabschnitt (5d) einen im wesentlichen zwischen 150° und 175° betragenden Winkel ($\alpha$) abgrenzt.

7. Blindnieteinheit nach einem der Ansprüche 2 bis 6, dadurch gekennzeichnet, daß Endabschnitt (5d) der Hülse ein im wesentlichen zylindrischer Abschnitt ist, der sich parallel zu der Achse (X) erstreckt.

8. Blindnieteinheit nach Anspruch 7, dadurch gekennzeichnet, daß der Dorn (2) einen Schaft (2b) zylindrischer Form hat, wobei ein ringförmiger Leerraum (j) die zylindrische Innenfläche des Endabschnitts (5d) der Hülse von der zylindrischen Oberfläche des besagten Dornschafts trennt.

9. Blindnieteinheit nach einem der Ansprüche 2 bis 8, dadurch gekennzeichnet, daß die Dicke $e_3$ der Hülse in Höhe des Endabschnitts (5d) $1,3 \leqq \frac{e_3}{e_2} \leqq 1,9$ entspricht, wobei Außendurchmesser $D_3$ des besagten Endabschnitts höchstens so groß ist wie der Außendurchmesser $D_1$ des Einführabschnitts.

10. Blindnieteinheit nach einem der Ansprüche 2 bis 9, dadurch gekennzeichnet, daß die Haltemittel an dem freien Ende des Endabschnitts (5d) der Hülse eine Aussenfase (6) und an der dem Kopf (2a) des Dornes gegenüberliegenden Fläche einen entsprechenden Kragen (7d) aufweisen, um zentrifugales Gleiten des freien Endes der Hülse zu verhindern.

11. Nieteinheit nach den Ansprüchen 8 und 10 gemeinsam, dadurch gekennzeichnet, daß Kopf (2a) des Dornes am Anschluß zwischen dem Kopf und dem Schaft eine Fase aufweist, um das freie Ende der Hülse in Zentripetalrichtung zu erhalten.

12. Nieteinheit nach einem der Ansprüche 2 bis 11, dadurch gekennzeichnet, daß Schrägabschnitt (5b) und Endabschnitt (5d) der Hülse Axiallängen h bzw. H aufweisen, die so beschaffen sind, daß sie $0,4 \leqq \dfrac{h}{H} \leqq 1$ entsprechen.

13. Nieteinheit nach einem der Ansprüche 2 bis 12, bei der die rohrförmige Hülse (1) gegenüber ihrem Schaftabschnitt (5) mit einem vorgeformten Kopf (3) versehen ist.

14. Nieteinheit nach einem der Ansprüche 2 bis 13, umfassend Mittel (9, 10) zum Bördeln des Dornes in der Hülse sowie Mittel (11) zum Abbrechen der Verlängerung des Dornes bei Abschluß des Setzens.

15. Verbindung von Materialien durch Durchführen des Verfahrens nach Anspruch 1, bei dem die Materialien zwischen einem Kopf der Hülse, insbesondere einem vorgeformten Kopf, und einer kontinuierlichen Abstützung gehalten werden, wobei die besagte Abstützung durch eine einzige Hülsenfalte gebildet wird, die sich auf kontinuierliche Weise rings um das Loch in den Materialien erstreckt.

**Claims**

1. A process for assembling materials by means of a blind riveting member of the type comprising a one-piece tubular casing (1) and a mandrel (2) having a head (2a) the diameter of which is larger than the bore of casing (1) and a shank (2b) located within said bore with an extension (2c) protruding opposite its head, whereby said process consists:
   - in piercing a hole in the materials,
   - in making use of a blind riveting member, the casing (1) of which has an insertion portion, the external diameter of which corresponds substantially to the diameter of the hole, and a stem portion (5) intended to protrude from one side of the materials while presenting successively a first articulation zone (5a), an inclined portion (5b), a second articulation zone (5c) and an end portion (5d), said end portion (5d) and head (2a) of the mandrel being provided with holding means (6-8) adapted to prevent radial sliding of the free end of the casing in relation to the head of the mandrel,
   - in positioning the riveting member within the hole in the materials so that the stem portion of the casing protrudes from one side and the extension of the mandrel protrudes from the other side, the head of the mandrel being applied to the free end of the end portion of the casing so that their holding means cooperate,
   - and in exerting a pull at the extension of the mandrel so that the head of the latter gives rise to a longitudinal strain on the free end of the casing, said process being characterised in that:
   - one selects a riveting member having the following characteristics:
     . the first articulation zone (5a) comprises an external groove defined by two flared lips inclined in relation to a radial plane, this first articulation zone being situated in the proximity of the junction between the insertion portion (4) located within the hole in the materials and the stem portion (5) protruding from said hole, so that it comes to be placed in the proximity of the surface of the materials when the riveting member is positioned within the hole,
     . the inclined portion (5b) presents the general shape of a tubular truncated cone and diverges from the casing, starting from the first zone of articulation,
     . the second articulation zone (5c) is an angular zone for changing direction towards the axis, with a void annular space separating the internal face of the casing from the external surface of the mandrel,
     . the end portion (5d) has a tubular shape the direction of which is different from that of the inclined portion (5b) so as to form with this latter an angle ($\alpha$) smaller than 180°,
   - one exerts an appropiate pull on the extension of the mandrel and a peripheral counterpressure on the casing so as to cause unsymmetrical folding of the first articulation zone and of the second articulation zone and form, in the proximity of the materials a casing fold oriented towards said materials,
   - one continues the above pull in order to approach the fold of the materials and cause it to abut said materials with a view to forming a stop member at the periphery of the hole.

2. A blind riveting member for carrying out the process as in Claim 1, comprising a one-piece tubular casing (1) and a mandrel (2) having a head (2a), the diameter of which is larger than the bore of casing (1), and a shank (2b) located within said bore with an extension (2c) protruding opposite its head, said casing (1) having an insertion portion, the external diameter of which corresponds substantially with the diameter of the hole, and a stem portion (5) intended to protrude from one side of the materials and presenting successively a first articulation zone (5a), an inclined portion (5b), a second articulation zone (5c) and an end portion (5d), said end portion (5d) and the head (2a) of the mandrel being provided with holding means (6-8) adapted to prevent radial sliding of the free end of the casing in relation to the head of the mandrel, said riveting member being characterised in that:

- the first articulation zone (5a) comprises an external groove defined by two flared lips inclined in relation to a radial plane, said zone being situated in the proximity of the junction between the insertion portion (4) intended to locate within the hole in the materials and the stem portion (5) intended to protrude from said hole so as to be placed in the proximity of the surface of the materials when the riveting member is positioned within the hole,
- the inclined portion (5b) has the general shape of a tubular truncated cone and diverges from the casing, starting from the first zone of articulation,
- the second articulation zone (5c) is an angular zone for changing direction towards the axis, with a void annular space separating the internal face of the casing from the external surface of the mandrel,
- the end portion (5d) has a tubular form the direction of which is different from that of the inclined portion (5b) so as to form with this latter an angle ($\alpha$) smaller than 180°.

3. A blind riveting member as in Claim 2, characterised in that the angle of opening ($\beta$) formed by the two lips ($L_1$, $L_2$) of the groove is substantially between 120° and 160°.

4. A blind riveting member as in one of Claims 2 or 3, characterised in that the thickness $e_2$ of the casing at the level of the first articulation zone (5a) is such that $0.3 \leq \dfrac{e_2}{e_1} \leq 0.7$, where $e_1$ is the thickness of said casing at the level of insertion portion (4).

5. A blind riveting member as in one of Claims 2, 3 or 4, characterised in that the inclined portion (5b) of the casing forms with the axis (X) an angle of inclination ($\gamma$) substantially between 5° and 30°.

6. A blind riveting member as in one of Claims 2 to 5, characterised in that the second articulation zone (5c) is an angular zone for changing direction defining an internal angle ($\alpha$) between the inclined portion (5b) and the end portion (5d) substantially between 150° and 175°.

7. A blind riveting member as in one of Claims 2 to 6, characterised in that the end portion (5d) of the casing is a substantially cylindrical portion extending parallel to the axis (X).

8. A blind riveting member as in Claim 7, characterised in that the mandrel (2) has a shank (2b) of cylindrical shape, an annular void space (j) separating the internal cylindrical face from the end portion (5d) of the casing and the cylindrical surface of said shank of the mandrel.

9. A blind riveting member as in one of Claims 2 to 8, characterised in that the thickness $e_3$ of the casing at the level of the end portion (5d) is such that $1.3 \leq \dfrac{e_3}{e_2} \leq 1.9$, the external diameter $D_3$ of said end portion being at most equal to the external diameter $D_1$ of the insertion portion.

10. A blind riveting member as in one of Claims 2 to 9, characterised in that the holding means comprise an external chamfer (6) provided at the free end of end portion (5d) of the casing and a corresponding collar (7d) provided on the face opposite the head of mandrel (2a) in order to prevent centrifugal sliding of the free end of the casing.

11. A riveting member as in Claims 8 and 10 jointly, characterised in that the head of mandrel (2a) comprises a chamfer (8) at the head/shank junction in order to hold the free end of the casing in the centripetal direction.

12. A riveting member as in one of Claims 2 to 11, characterised in that the inclined portion (5b) and the end portion (5d) of the casing have axial lengths h and H respectively such that $0.4 \leq \dfrac{h}{H} \leq 1$.

13. A riveting member as in one of Claims 2 to 12, wherein the tubular casing (1) has a preformed head (3) opposite its stem portion (5).

14. A riveting member as in one of Claims 2 to 13, comprising means (9, 10) for crimping the mandrel in the casing and means (11) for rupturing the extension of the mandrel at the end of the setting operation.

15. Assembly of materials obtained by carrying out the process according to Claim 1, in which the materials are held between a head of the casing, in particular a preformed head, and a continuous stop member formed by a single fold of the casing extending in continuous manner around the hole in the materials.

Fig.1

Fig. 2

Fig. 3

Fig. 4

Fig. 5

5c

5a

Fig. 6

5a

5c

9

η

ν

Fig. 7

5b

Fig. 8

Fig. 9

EP 0 398 403 B1